Europäisches Patentamt

European Patent Office

Office européen des brevets

(11) Veröffentlichungsnummer: **0 291 003**
**B1**

(12) **EUROPÄISCHE PATENTSCHRIFT**

(45) Veröffentlichungstag der Patentschrift:
**12.09.90**

(21) Anmeldenummer: **88107459.5**

(22) Anmeldetag: **10.05.88**

(51) Int. Cl.⁵: **F28F 11/02,** F16L 55/10,
B21D 39/06

(54) Hohlstopfen zum Verschliessen eines Wärmetauschrohres.

(30) Priorität: **15.05.87 DE 3716328**

(43) Veröffentlichungstag der Anmeldung:
**17.11.88 Patentblatt 88/46**

(45) Bekanntmachung des Hinweises auf die Patenterteilung:
**12.09.90 Patentblatt 90/37**

(84) Benannte Vertragsstaaten:
**BE CH DE ES FR IT LI NL SE**

(56) Entgegenhaltungen:
**EP-A- 0 034 549**
**EP-A- 0 113 080**
**EP-A- 0 122 610**
**EP-A- 0 181 250**
**EP-A- 0 248 728**
**FR-A- 1 238 027**
**GB-A- 2 079 204**

(73) Patentinhaber: **ABB Reaktor GmbH, Dudenstrasse 44,
D-6800 Mannheim 1(DE)**

(72) Erfinder: **Pötz, Franz, Kreuzberger Strasse 36,
D-6148 Heppenheim(DE)**
Erfinder: **Daum, Dieter, Dr., Starkenburgweg 18,
D-6148 Heppenhelm(DE)**

(74) Vertreter: **Rupprecht, Klaus, Dipl.-Ing. et al, c/o BBC
Brown Boveri Aktiengesellschaft ZPT
Postfach 100351 Kallstadter Strasse 1,
D-6800 Mannheim 1(DE)**

ACTORUM AG

**Beschreibung**

Die Erfindung betrifft einen Hohlstopfen zum Verschließen eines Wärmetauscherrohres, der mit Hilfe der Aufweittechnik in einem vorgebbaren Aufweitbereich mit dem Wärmetauscherrohr eine kraftschlüssige Verbindung eingeht, wobei die Hohlstopfenmantelfläche des Aufweitbereiches mit unterschiedlicher Oberflächenhärte ausgestattet ist und wobei der Härtegrad des Teiles mit der geringeren Oberflächenhärte unterhalb des Härtegrades des Wärmetauscherrohres liegt.

Derartige Hohlstopfen werden seither mit Hilfe der zum Festlegen von Wärmetauscherrohren in Rohrböden bekannten Aufweittechnik durch beispielsweise hydraulische oder explosive Einwirkung mit der Innenwand der Wärmetauscherrohre kraftschlüssig verbunden. Diese Befestigungsart zeigt jedoch Mängel, da sie verschiedenen Wechselbelastungen beim Betrieb und beim Prüfen der Verbindung zwischen Stopfen und Rohr nicht standhält. Eine zusätzliche Sicherung der Verbindung durch eine Schweißnaht ist nachteilig, weil dann die notwendige Lösbarkeit des Stopfens nur durch aufwendige mechanische Bearbeitung erfolgen könnte. Dagegen läßt sich der eingewalzte Stopfen durch Erwärmung seiner Innenseite und den dadurch ausgelösten Schrumpfvorgang leicht lösen.

Ein Hohlstopfen der oberbegrifflichen Art ist aus der EP-A 0 113 080 bekannt. Dort ist ein Teilbereich des Hohlstopfenmantels mit einer Aussparung versehen, die mit einem elastischen Dichtungsmittel ausgefüllt ist.

Aus der EP-A 0 248 728 ist ein Stand der Technik nach Art. 54 (3) EPÜ bekannt. Dort ist zum Verschließen eines Wärmetauscherrohres ein Stopfen beschrieben, dessen Mantelfläche mit unterschiedlicher Oberflächenhärte ausgestattet ist, wobei der Bereich mit der größeren Oberflächenhärte eine Profilierung aufweist.

Ferner ist aus der EP-A 0 122 610 ein mechanisch einsetzbarer Hohlstopfen zum Verschließen eines Wärmetauscherrohres bekannt, dessen Aufweitbereich mit einem geschmeidigen Metall, wie z.B. Gold, beschichtet ist, das beim Aufweiten des Stopfens in Risse der Rohrwandung eindringen soll.

Aus der EP-A 44 982 ist ein Hohlstopfen bekannt, der mit Hilfe eines konischen Druckstückes aufgeweitet wird. Die Vorsprünge am Umfang des Stopfens führen jedoch zu solchen Beschädigungen an der Rohrwand, die nach dem Entfernen des Stopfens nur durch Nacharbeit ausgeglichen werden können. Bei den großen Kräften, die das mit einem Hydraulikzylinder verbundene konische Druckstück auf die Stopfen und auf die Rohrwandung ausübt, kann eine bleibende Verformung an den Berührungsflächen nicht ausgeschlossen werden. Soll der Stopfen durch Lösen des konischen Druckstückes entfernt werden, bleibt er möglicherweise in seiner gedehnten Stellung und läßt sich dann nur noch durch aufwendige mechanische Bearbeitung, wie z. B. Fräsen oder Bohren, unter erschwerten Umgebungsbedingungen entfernen.

Es ist die Aufgabe der Erfindung, einen Hohlstopfen der eingangs genannten Art anzugeben, der allen Betriebs- und Prüfbelastungen standhält, eine Nacharbeit der Rohrinnenwand nach dem Entfernen des Stopfens überflüssig macht, und trotzdem leicht einzubauen ist.

Gelöst wird diese Aufgabe erfindungsgemäß dadurch, daß der Härtegrad des Teiles mit der größeren Oberflächenhärte oberhalb des Härtegrades des Wärmetauscherrohres liegt, daß bei einem in seinem zylindrischen Teil länger als der Aufweitbereich ausgebildeten Hohlstopfen die Mantelfläche des Aufweitbereiches einen um den Verformungsweg der kraftschlüssigen Aufweitverbindung größeren Durchmesser aufweist als die verbleibende Mantelfläche des zylindrischen Teiles und daß der Teil des Aufweitbereiches mit der größeren Oberflächenhärte eine Profilierung aufweist, die durch Auftragen eines Materials der entsprechenden Härte und Rauhheit gebildet ist.

Beim Aufweitvorgang dringt die Profilierung nur soweit in die Wandung des Wärmetauscherrohres ein, bis die Verformung des Teiles des Aufweitbereiches mit der geringeren Härte abgeschlossen ist. Versuche haben gezeigt, daß der Verformungsweg bis zu einer einwandfreien kraftschlüssigen Verbindung etwa 0,05 bis 0,1 Millimeter beträgt. D. h., daß der profilierte Teil der Mantelfläche etwa 0,01 bis 0,05 Millimeter in die Wandung des Wärmetauscherrohres eindringt und mit diesem eine formschlüssige Verbindung herstellt. Die Kombination kraftschlüssiger und formschlüssiger Verbindung ist einfach aufgebaut und allen Belastungsfällen gewachsen. Mit einer Eindringtiefe von maximal 0,05 Millimeter erfolgt keine nennenswerte Beschädigung der Innenfläche des Wärmetauscherrohres, so daß eine Nacharbeit nach dem Entfernen des Hohlstopfens nicht erforderlich ist. Der Ausbau des Hohlstopfens ist trotz der zusätzlichen formschlüssigen Verbindung mit der eingangs erwähnten Schrumpfmethode auf einfache Weise möglich.

Nach einer anderen Ausgestaltung ist der Teil des Aufweitbereiches mit der größeren Oberflächenhärte ein geschlitzter Federring, der in einer Aussparung des Hohlstopfens angeordnet ist und an seiner zur Innnenwand des Wärmetauscherrohres gerichteten Seite die Profilierung aufweist. Durch die geschlitzte federnde Ausführung läßt sich dieser Ring über den Außendurchmesser des Hohlstopfens schieben und in die Aussparung einrasten. Er ist so ausgebildet, daß er mit seiner Innenumfangsfläche an der Außenumfangsfläche der Aussparung zur Anlage kommt und dabei der Außenumfang der Profilierung mit dem Außenumfang des die geringere Oberflächenhärte aufweisenden Teiles des Aufweitbereiches vor dem Aufweitvorgang mindestens bündig ist.

Damit nach erfolgtem Aufweitvorgang der Formschluß mit dem geschlitzten Federring besser ausgebildet ist, ist der Federring auch auf seiner Rückseite mit einer Profilierung versehen.

Eine weitere Ausgestaltung sieht vor, daß der Teil des Aufweitbereiches mit der größeren Oberflächenhärte durch einen eng gewickelten Federdraht gebildet ist, der in einer Aussparung des Hohlstopfens angeordnet ist. Dabei bildet der Federdraht selbst die Profilierung, die sowohl das gewünschte Maß in die Innenwand des Wärmetauscherrohres als auch in die Umfangsfläche der Aussparung eindringt.

Anhand verschiedener Ausführungsbeispiele und der schematischen Zeichnungen Figur 1 bis 4 wird der erfindungsgemäße Hohlstopfen und seine vorteilhaften Ausgestaltungen beschrieben.

Dabei zeigt die

Figur 1 einen Längsschnitt durch den Teilbereich eines Wärmetauscherrohres mit einem Hohlstopfen und einem Aufweitwerkzeug,

Figur 2, 2a jeweils einen Halbschnitt eines Wärmetauscherrohres mit einem Hohlstopfen vor und nach dem Aufweitvorgang und

Figur 3, 3a, 4 und 4a andere Ausgestaltungen der Ausführungen nach Figur 2, 2a.

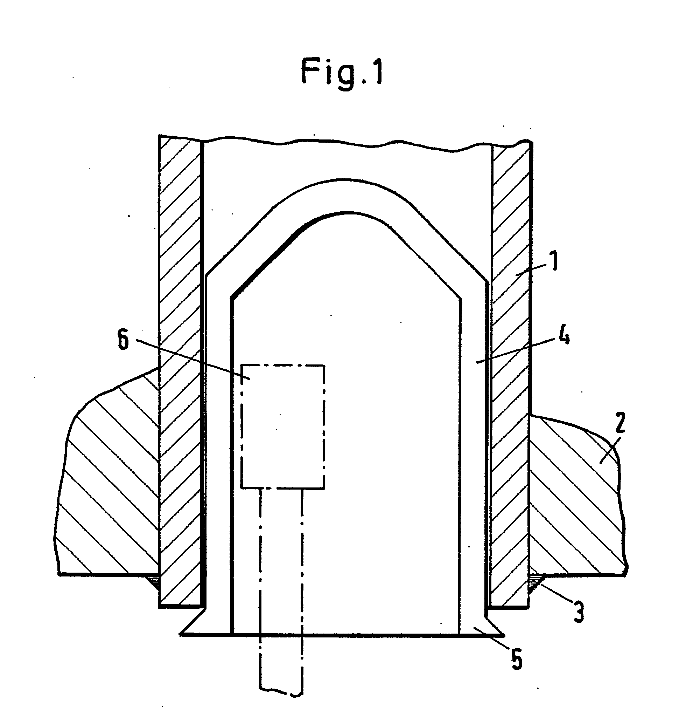

Die Figur 1 zeigt in einem Längsschnitt den Teilbereich eines Wärmetauscherrohres 1, das in einem Rohrboden 2 eines nicht weiter dargestellten Dampferzeugers einer kerntechnischen Anlage eingesetzt und mit einer Schweißnaht 3 gesichert ist. Der Rohrboden 2 eines derartigen Dampferzeugers wird von einer Vielzahl von Rohren 1 durchsetzt. Wird bei wiederkehrenden Prüfungen festgestellt, daß ein Rohr 1 defekt ist, so muß es mit einem Hohlstopfen 4 verschlossen und blindgesetzt werden. Dazu wird der gegenüber der Innenwandung des Rohres 1 mit einem geringen Spiel versehene Hohlstopfen 4 bis zu seinem Anschlag 5 in das Rohr eingeführt und erfährt mit einem in strichpunktierten Linien angedeuteten Walzwerkzeug 6 eine aus dem Einbringen von Rohren in Rohrböden bekannte Haftaufweitung. Bei einer späteren Revision muß der Stopfen gegebenenfalls entfern werden um das defekte Rohr austauschen oder reparieren zu können. Das Setzen und Entfernen des Stopfens muß schnell erfolgen, um die Strahlenbelastung für das Reparatur-Personal gering zu halten.

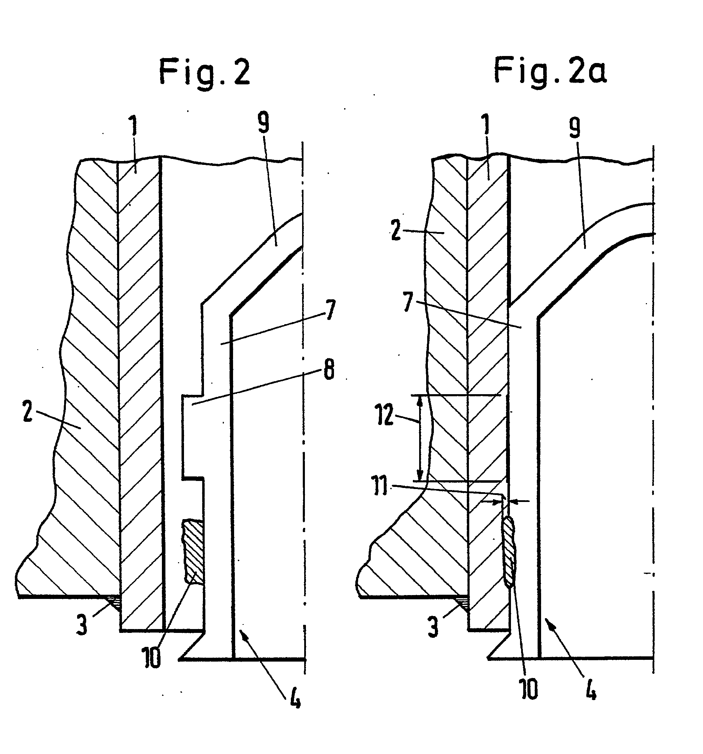

Anhand der Figuren 2 bis 4 werden Ausführungsbeispiele eines erfindungsgemäßen Stopfens beschrieben.

Die Figur 2 zeigt in einem Halbschnitt den Hohlstopfen 4 in seiner Aufweitposition vor dem Aufweitvorgang in das Wärmetauscherrohr 1, das über die Schweißnaht 3 in dem Rohrboden 2 festgelegt ist. Der Hohlstopfen 4 besteht aus einem hohlzylindrischen Teil 7, von dem ein Anschlag 5 und ein Bund 8 auskragt sowie aus einem kegelförmig ausgebildeten Stopfenabschluß 9. In seiner Wanddicke ist der Hohlstopfen überdimensioniert gezeichnet um die Mantelflächenausbildung besser darstellen zu können. Der Bund 8 ragt etwa 0,05 bis 0,1 Millimeter über die restliche Mantelfläche des hohlzylindrischen Teiles 7 hinaus und weist eine Breite von etwa 10 Millimeter auf. Dicht unterhalb des Bundes 8 ist eine Schicht 10 eines Materials auf dem hohlzylindrischen Teil 7 aufgetragen, das eine größere Oberflächenhärte besitzt als der Bund 8 und ebenfalls 0,05 bis 0,1 Millimeter über die restliche Mantelfläche des hohlzylindrischen Teiles 7 hinausragt und eine Breite von ca. 6 Millimeter aufweist. Die Mantelfläche der Schicht 10 ist mit einer Profilierung versehen, die eine Profiltiefe von 0,01 bis 0,05 Millimeter besitzt. Der Bund 8, dessen Oberfläche einen geringeren Härtegrad aufweist als die Innenwand des Rohres 1 und die Schicht 10 bilden zusammen den Aufweitbereich, der von dem in der Figur 1 angedeuteten Aufweitwerkzeug 6 beaufschlagt wird. Beim Aufweitvorgang wird die Materialmasse des Bundes 8 derart gestaucht, daß er praktisch nicht mehr vorhanden ist. Die durch die Stauchung entstandene Streckgrenzenänderung im Werkstoff des hohlzylindrischen Teiles bewirkt gleichzeitig eine Erhöhung der kraftschlüssigen Verbindung zwischen dem Hohlstopfen und dem Wärmetauscherroh 1. Beim Aufweitvorgang dringt die eine größere Härte als die Innenwand des Rohres 1 aufweisende Profilierung der Schicht 10 so weit (nämlich 0,01 bis 0,05 Millimeter) in die Innenwand des Rohres 1 ein, wie es durch den Verformungsvorgang des Bundes 8 vorgegeben ist. Die den Formschluß bewirkende Eindringtiefe ist in der Figur 2a, die einen Halbschnitt nach vollzogenem Aufweitvorgang darstellt durch einen Abstand 11 symbolisiert. Ein wesentlicher Teil der kraftschlüssigen Verbindung wird durch eine Strecke 12 angedeutet. Zu erkennen ist die kraftschlüssige Verbindung in der Figur 2a nicht mehr, da der Bund 8 in die Mantelfläche des hohlzylindrischen Teiles 7 eingeflossen ist.

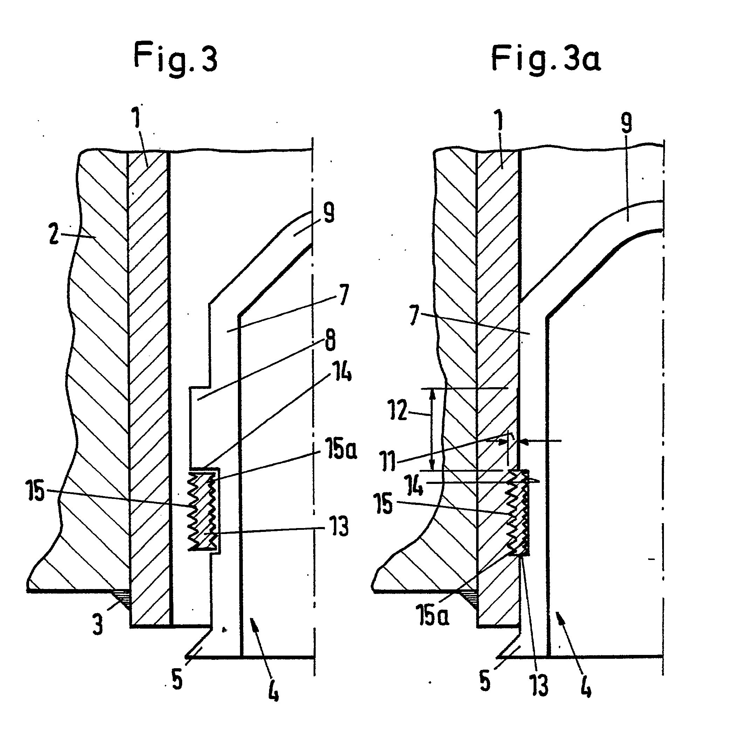

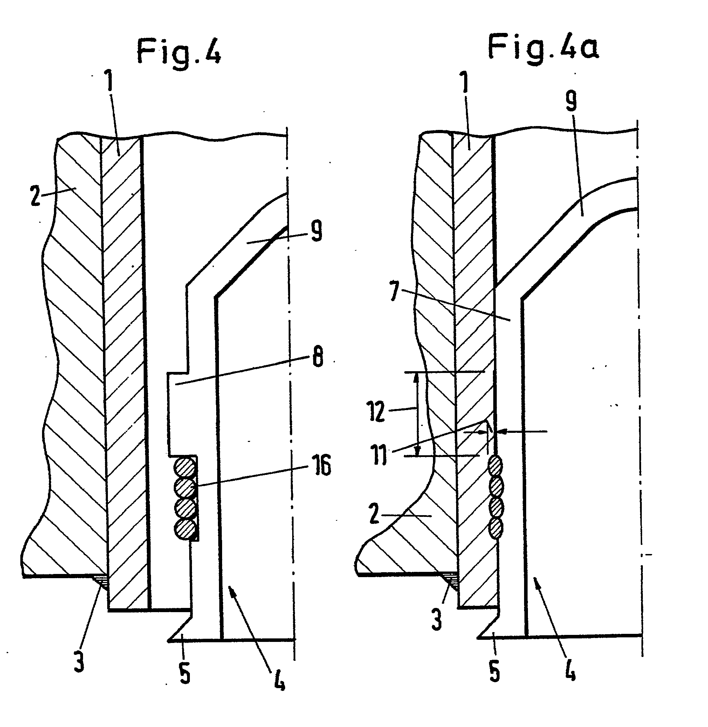

In den Figuren 3 und 4 ist bei einem ansonsten mit der Figur 2 gleichen Aufbau der Aufweitbereich hinsichtlich seines mit einer größeren Oberflächenhärte ausgestatteten Teiles anders ausgebildet.

Nach der Figur 3 ist dem Bund 8 ein Federring 13, der den gleichen Härtegrad wie die Schicht 10 nach der Figur 2 aufweist, unmittelbar nebengeordnet. Der Mantel des Federringes 13 ist mit einem nicht dargestellten Schlitz versehen, damit er über den Bund 8 schiebbar ist und in die Aussparung 14 des hohlzylindrischen Teiles 7 eingebracht werden kann. Der geschlitzte Federring 13 kommt an der Umfangsfläche der Aussparung 14 in seiner entspannten Stellung zur Anlage. In axialer Richtung besteht zwischen dem Federring 13 und der Aussparung 14 ein Spiel von einigen Zehnteln Millimetern. Der Federring besitzt eine Wandstärke von ca. 0,3 Millimeter und ist an seiner Mantelfläche mit einer Profilierung 15 mit 0,01 bis 0,05 Millimeter Profiltiefe versehen. Vor dem Aufweiten ragt er genausoweit wie der Bund 8 (0,05 bis 0,1 Millimeter) über die restliche Mantelfläche des hohlzylindrischen Teils 7 hinaus. Bei diesem Ausführungsbeispiel bildet der Bund 8 und der Federring 13 den Aufweitbereich. Das Aufweiten erfolgt in der gleichen Weise wie zu der Figur 2 erläutert. Gemäß Figur 3a, die einen Halbschnitt des Hohlstopfens nach erfolgter Aufweitung zeigt, ist mit dem Abstand 11 wieder die Eindringtiefe (0,01 bis 0,05 Millimeter) des Formschlusses symbolisiert während mit der Strecke 12 die kraftschlüssige Verbindung zwischen dem Bund 8 und dem Rohr 1 angedeutet ist. Um eine bessere Arretierung des Federringes 13 gegenüber der Aussparung 14 zu erzielen kann seine dem Rohr 1 abgewandte Seite ebenfalls mit einer Profilierung 15a versehen sein. Dieses Profil wird dann beim Aufweitvorgang in die Umfangsfläche der Aussparung 14 eingedrückt. Die Gesamtdicke des Federringes 13 muß dann um diese Eindringtiefe größer ausgelegt werden.

Nach der Figur 4 ist dem Bund 8 anstelle der Schicht 10 nach der Figur 2 bzw. des Federringes 13 nach der Figur 3 ein eng gewickelter Federdraht 16 nebengeordnet. Die Federwicklung läßt sich leicht über den Bund 8 schieben und in einer Aussparung 17 arretieren. Der gewählte Drahtdurchmesser der Wicklung beträgt ca. 0,3 Millimeter. Er steht ein ebensolches Maß wie der Bund 8 über die restliche Mantelfläche des hohlzylindrischen Teiles 7 hinaus. Nach dem in der Figur 4a gezeigten Aufweitvorgang ist der Draht 16 sowohl in das Rohr 1 als auch in den Hohlstopfen 4 eingedrungen und stellt den Formschluß des Aufweitbereiches (symbolisiert durch den Abstand 11) dar. Der Kraftschluß erfolgt wie bei den anderen Ausführungsbeispielen durch den Bund 8, wie er durch die Strecke 12 der Figur 4a angedeutet ist. Ein Ausbau des Hohlstopfens ist trotz der zusätzlichen weggesteuerten formschlüssigen Verbindung mit der eingangs erwähnten Schrumpfmethode auf einfache Weise möglich, da alle den härteren Teil des Aufweitbereiches bildenden Ausführungen die Schrumpfbewegung mit ausführen.

## Patentansprüche

1. Hohlstopfen (4) zum Verschließen eines Wärmetauscherrohres (1), der mit Hilfe der Aufweittechnik in einem vorgebbaren Aufweitbereich mit dem Wärmetauscherrohr eine kraftschlüssige Verbindung eingeht, wobei die Hohlstopfenmantelfläche des Aufweitbereiches mit unterschiedlicher Oberflächenhärte ausgestattet ist und wobei der Härtegrad des Teiles mit der geringeren Oberflächenhärte unterhalb des Härtegrades des Wärmetauscherrohres liegt, dadurch gekennzeichnet, daß der Härtegrad des Teiles mit der größeren Oberflächenhärte oberhalb des Härtegrades des Wärmetauscherrohres (1) liegt, daß der zylindrische Teil (7) länger als der Aufweitbereich ausgebildet ist, die Mantelfläche des Aufweitbereiches einen um den Verformungsweg der kraftschlüssigen Aufweitverbindung größeren Durchmesser aufweist als die verbleibende Mantelfläche des zylindrischen Teiles (7) und daß der Teil des Aufweitbereiches mit der größeren Oberflächenhärte eine Profilierung aufweist, die durch Auftragen eines Materials der entsprechenden Härte und Rauheit gebildet ist.

2. Hohlstopfen nach Anspruch 1, dadurch gekennzeichnet, daß der Teil des Aufweitbereiches mit der größeren Oberflächenhärte ein geschlitzter Federring (13) ist, der in einer Aussparung (14) des zylindrischen Teils (7) des Hohlstopfens angeordnet ist und an seiner zur Innenwandung des Wärmetauscherrohres (1) gerichteten Seite eine Profilierung (15) aufweist.

3. Hohlstopfen nach Anspruch 2, dadurch gekennzeichnet, daß der Federring (13) auch an seinem der Innenwand des Wärmetauscherrohrs (1) abgewandten Seite mit einer Profilierung (15a) versehen ist.

4. Hohlstopfen nach Anspruch 1, dadurch gekennzeichnet, daß der Teil des Aufweitbereiches mit der größeren Oberflächenhärte ein eng gewickelter Federdraht (16) ist, der in einer Aussparung (17) des hohlzylindrischen Teiles (7) angeordnet ist, wobei der Federdraht selbst die Profilierung bildet.

## Claims

1. Hollow plug for blocking a heat exchanger tube, which makes a frictional joint with the heat exchanger tube, in a predeterminable expansion zone, with the aid of expansion methods, the outer surface of the hollow plug in the expansion zone is provided with differing surface hardness and the degree of hardness of the part with the lesser surface hardness lying below the degree of hardness of the heat exchanger tube, characterized in that the degree of hardness of the part with the greater surface hardness lying above the degree of hardness of the heat exchanger tube, that the cylindrical part is longer than the expansion zone, the outer surface of the expansion zone has a diameter greater by the amount of the deformation travel of the frictional expansion joint, than the remaining outer surface of the cylindrical part (7), and the surface of the part with the greater surface hardness having a relief pattern, which is constituted by application of a material of corresponding hardness and roughness.

2. Hollow plug according to Claim 1 or 2, characterized in that the part of the expansion zone with the greater surface hardness is a slotted spring ring (13), which is arranged in a recess (14) in the cylindrical part (7) of the hollow plug, and which has a relief pattern (15) on its side directed towards the inner wall of the heat exchanger tube (1).

3. Hollow plug according to Claim 2 characterized in that the spring ring (13) also has a relief pattern (15a) on its side facing away from the inner wall of the heat exchanger tube (1).

4. Hollow plug according to Claim 1 or 2, characterized in that the part of the expansion zone with the greater surface hardness is a closely wound spring wire (16), which is arranged in a recess (17) in the hollow cylindrical part (7), the spring wire itself constituting the relief pattern.

## Revendications

1. Bouchon creux (4), destiné à l'obturation d'un tube (1) d'échangeur de chaleur et amené, à l'aide de la technique d'épanouissement, en liaison à serrage avec le tube d'échangeur de chaleur, dans une zone d'épanouissement pouvant être prédéterminée, la surface d'enveloppe du bouchon creux présentant dans la zone d'épanouissement des duretés superficielles différenciées et le degré de dureté de la partie de plus faible dureté superficielle étant inférieur au degré de dureté du tube d'échangeur de

chaleur, caractérisé en ce que le degré de dureté de la partie de plus forte dureté superficielle est supérieur au degré de dureté du tube (1) d'échangeur de chaleur, que la partie cylindrique (7) est plus longue que la zone d'épanouissement, que la surface d'enveloppe de la zone d'épanouissement présente un diamètre qui est supérieur, de la valeur de déformation de la liaison à serrage par épanouissement, à celui de la surface restante de l'enveloppe de la partie cylindrique (7), et que la partie de la zone d'épanouissement présentant la dureté superficielle plus élevée possède un profilage qui est formé par l'application d'un matériau de dureté et de rugosité correspondantes.

2. Bouchon creux selon la revendication 1, caractérisé en ce que la partie de la zone d'épanouissement qui est de dureté superficielle plus élevée est une bague élastique fendue (13) qui est disposée dans un évidement (14) de la partie cylindrique (7) du bouchon creux et qui présente un profilage sur sa face orientée vers la paroi intérieure du tube (1) d'échangeur de chaleur.

3. Bouchon creux selon la revendication 2, caractérisé en ce que la bague élastique (13) est également pourvue d'un profilage (15a) sur sa face qui est éloignée de la paroi intérieure du tube (1) de l'échangeur de chaleur.

4. Bouchon creux selon la revendication 1, caractérisé en ce que la partie de la zone d'épanouissement qui présente la dureté superficielle plus élevée est un fil métallique élastique (16) enroulé serré, qui est disposé dans un évidement (17) de la partie cylindrique creuse (7), le fil métallique élastique même formant le profilage.

# Fig.1

# Fig.2

# Fig.2a

# Fig. 3

# Fig. 3a

# Fig.4

# Fig.4a